# EUROPEAN PATENT APPLICATION

(11) **EP 3 339 630 A1**
(43) Date of publication of application: **27.06.2018**
(21) Application number: 16206026.3
(22) Date of filing: 21.12.2016
(51) Int. Cl.: F03B 13/26

(54) **A METHOD AND SYSTEM OF DEPLOYING OR RECOVERING A HYDROELECTRIC TURBINE**

(71) Applicant: Openhydro IP Limited, Dublin 1 (IE)
(72) Inventor: Doyle, Tom, Dublin, 9 (IE); Jackson, Richard, County Kilkenny (IE); Dunne, Paul, Dublin, 9 (IE)
(74) Representative: FRKelly

(57) **Abstract**

The present invention provides a system and method of deploying and recovering a hydroelectric turbine (T) onto a subsea base (12) preinstalled on a subsea surface, the method comprising positioning a deployment vessel (14) above the subsea base (12) and lowering or raising the turbine (T) between the deployment vessel (14) and the subsea base (12) by means of a frame assembly (26).

## Description

### Field of the invention

The present invention relates to a system and method of deploying or recovering a hydroelectric turbine from a subsea base, and in particular a system and method which enables the turbine to be deployed with a power extraction cable preinstalled on the turbine.

### Backaround of the invention

In the last decade renewable energy has become an accepted form of large scale energy generation and a potentially viable alternative to the widespread use of fossil fuels and to a lesser extent nuclear fuel, with many projects being developed around solar energy, wind energy, and tidal power. Of these alternative forms of energy, tidal power is arguably the most attractive, given that ocean based tidal flows are entirely predictable and constant, unlike wind or solar energy which are relatively intermittent and therefore less dependable.

However, harnessing tidal energy does provide its own challenges, in particular with respect to the installation and maintenance of tidal power generators, for example hydroelectric turbines, which by the very nature of the operation of same must be located in relatively fast flowing tidal currents, and more than likely located on the seabed. These conditions are significantly inhospitable, and are not conducive to safe working conditions. The installation of a base on which such tidal turbines are mounted has conventionally involved actively securing the base to the seabed by means of piles or micro-piles driven into the seabed, on which piled base a turbine or secondary frame carrying one or more turbines can then be located. However, the sinking of a pile into the seabed in an area of high tidal flow is considerably problematic and generally a dangerous operation. In addition, significant drilling and piling equipment must be transported to and operated at the site of installation, significantly increasing the complexity and cost of the operation. As a result the use of "gravity" bases which are free standing on the seabed have become more widespread and offer several advantages over conventional piled structures.

In either case, the installation process is complicated by the requirement to establish an electrical connection with such a subsea base once it has been installed on the seabed, and this can give rise to both safety and reliability issues.

It is therefore an object of the present invention to provide an improved method of deploying or recovering a hydroelectric turbine onto a preinstalled subsea base. The term "subsea base" should be understood to mean both a conventional piled or otherwise actively secured base, which could also be defined solely be one or more piles, in addition to the above mentioned gravity type base.

### Summary of the invention

According to a first aspect of the present invention there is provided a method of deploying and recovering a hydroelectric turbine onto a subsea base located on a subsea surface, the method comprising:
positioning a deployment vessel above the subsea base; and
lowering or raising the turbine between the deployment vessel and the subsea base.

Preferably, the method comprises releasably securing a frame assembly to the turbine; and lowering or raising the frame assembly between the deployment vessel and the subsea base.

Preferably, the method comprises recovering the turbine from the subsea base by lowering the frame assembly from the deployment vessel into a position laterally adjacent the turbine prior to releasably securing the frame assembly to the turbine; advancing the frame assembly into contact with the turbine in order to align the frame assembly and the turbine; and further lowering the frame assembly before releasably securing the frame assembly to the turbine.

Preferably, the method comprises performing the method in a running tide; and positioning the frame assembly down tide of the turbine prior to lowering the frame into position laterally adjacent the turbine.

Preferably, the method comprises electrically connecting a power transmission cable to the turbine prior to lowering the turbine from the deployment vessel.

Preferably, the method comprises testing one or more electrical systems of the hydroelectric turbine once the power transmission cable has been electrically connected to the turbine.

Preferably, the method comprises at least partially lowering the turbine from the deployment vessel into water; displacing the vessel in the water in order to effect rotation of the turbine; and testing the electrical operation of the turbine prior to deploying on the subsea base.

Preferably, the method comprises tethering the deployment vessel to the subsea base prior to displacing the turbine between the deployment vessel and the subsea base.

Preferably, the method comprises lowering a recovery frame from the deployment vessel into register with the subsea base prior to lowering the turbine; releasably securing the recovery frame to the subsea base to tether the deployment vessel; and lowering the turbine onto the subsea base. Preferably, the method comprises releasing the recovery frame from the subsea base following the deployment of the hydroelectric turbine.

Preferably, the method comprises securing the frame assembly to the turbine at at least a pair of connection points on the turbine.

Preferably, the method comprises securing the frame assembly to the turbine at a pair of diametrically opposed connection points.

Preferably, the method comprises lowering the turbine onto the subsea base such that the pair of connection points are received in corresponding cradles on the subsea base.

Preferably, the method comprises transporting the turbine to the deployment vessel in a first orientation; and displacing the turbine into a second orientation before lowering the turbine from the deployment vessel.

Preferably, the method comprises floating the turbine to the deployment vessel.

According to a second aspect of the present invention there is provided a hydroelectric turbine deployment and recovery system comprising a deployment vessel; and a subsea base adapted to be releasably secured to the hydroelectric turbine at a pair of connection points on the turbine; wherein the deployment vessel is operable to displace the turbine between the deployment vessel and the subsea base.

Preferably, the deployment and recovery system comprises a frame assembly displaceable relative to the deployment vessel, the frame assembly comprising a pair of couplings releasably engagable with the hydroelectric turbine.

Preferably, the deployment and recovery system comprises a recovery frame adapted to be lowered from the deployment vessel and releasably secured to the subsea base in order to allow the vessel to be tethered to the subsea base.

Preferably, the subsea base comprises a guideway adapted to guide the turbine into register with the subsea base during lowering of the turbine onto the subsea base.

Preferably, the deployment and recovery system comprises at least one sensor operable to determine if the turbine and the subsea base are in working engagement with one another.

### Brief description of the drawings

The present invention will now be described with reference to the accompanying drawings, in which:
Figure 1 illustrates a perspective view of a hydroelectric turbine deployment and recovery system as positioned in a deployment configuration above a preinstalled subsea base;
Figure 2 illustrates the lowering of an optional recovery frame towards the subsea base;
Figure 3 illustrates the connection of the recovery frame to the subsea base in order to tether the deployment vessel in position above the subsea base;
Figure 4 illustrates the lowering of a hydroelectric turbine secured to a frame assembly towards the subsea base with the recovery frame of Figure 3 tethered to the subsea base;
Figure 5 illustrates the lowering of the hydroelectric turbine secured to a frame assembly towards the subsea base, in the absence of the optional recovery frame, and with an electrical cable preinstalled;
Figure 6 illustrates the docking of the hydroelectric turbine with the subsea base, again in the absence of the recovery frame;
Figure 7 illustrates the withdrawal of the frame assembly from about the docked turbine; and
Figure 8 illustrates the full withdrawal of the frame assembly back to the deployment vessel.

### Detailed description of the drawings

Referring now to the accompanying drawings there is illustrated a hydroelectric deployment and recovery system, generally indicated as 10, for effecting a method of deploying or recovering a hydroelectric turbine T from a preinstalled subsea base 12 forming part of the deployment and recovery system 10. Although not essential to the invention the subsea base 12 is preferably a "gravity" type base which is free standing on the seabed and does not require any piling or other fixing to the seabed. However any other form of base of foundation may be employed. The turbine T may be provided with a control system pod (not shown) mounted to the turbine T to house various control systems (not shown) and optionally to provide a location at which an electrical connection can be established with the turbine T in order to facilitate the extraction of electricity generated by the turbine T.

The deployment and recovery system comprises a deployment vessel 14 which in the embodiment illustrated is in the form of a catamaran having a pair of hulls 16 between which is defined a portal within which the turbine T may be received, although it will be appreciated from the following description that the deployment vessel 14 need not be of this particular configuration. The deployment vessel 14 may be unpowered and may be required to be towed or otherwise displaced to the deployment site at which the subsea base 12 has been preinstalled. Alternatively the deployment vessel 14 may include its own source of propulsion.

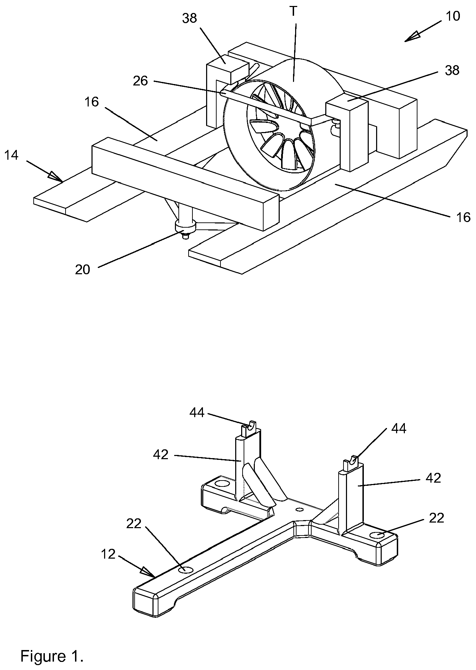

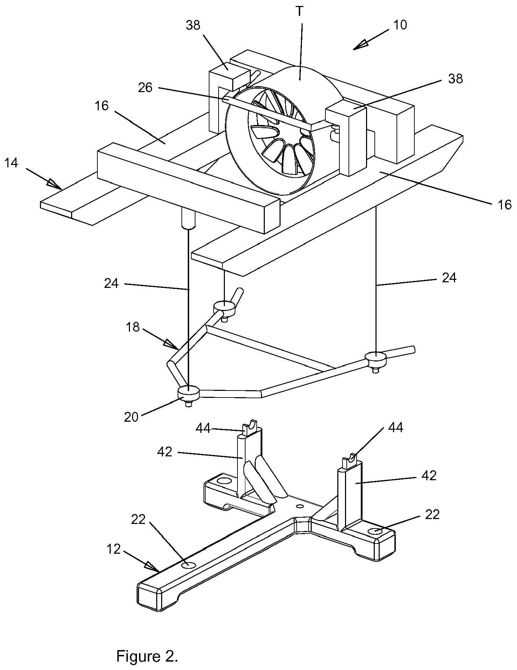

Once at the deployment site the deployment vessel 14 must be maintained in a relatively fixed position above the preinstalled subsea base 12, against the action of the relatively fast flowing tide which exists at the appropriate deployment sites. This may be achieved by means of the above mentioned tug or propulsion system on board the deployment vessel 14. However the deployment and recovery system 10 optionally includes a recovery frame 18 shown in Figures 1 to 4, which in the present embodiment is secured beneath the underside of the deployment vessel 14 and may be lowered downwardly away from the deployment vessel 14. The recovery frame 14 is designed to be utilised in deploying and retrieving the subsea base 12 in a separate operation not forming part of the claimed invention. Thus the recovery frame, as seen in Figure 2, incorporates a plurality of first couplers 20, for example in the form of a conventional ball grabs, which are locatable in corresponding sockets 22 formed in the subsea base 12. This arrangement allows the recovery frame 18 to be releasably secured to the subsea base 12 and to raise and/or lower the subsea base 12 from the same deployment vessel 14 in the abovementioned separate operation. This allows the deployment vessel 14 to be used in multiple operations, significantly reducing the cost of the combined operations due to the reuse of this hardware.

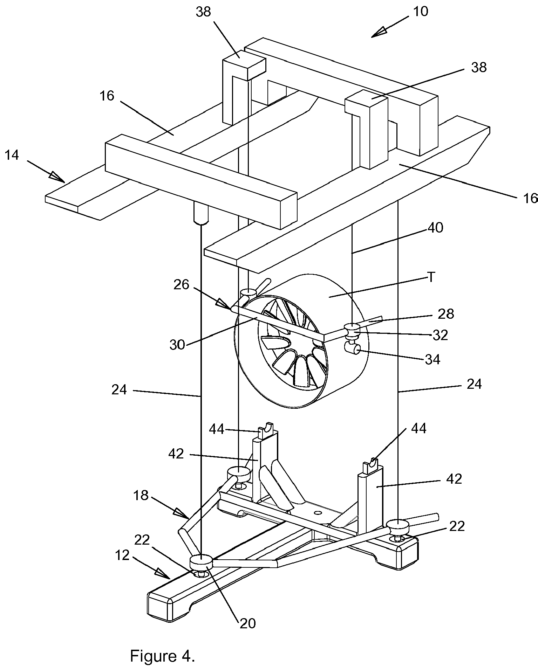

However for the purposes of the present invention the recovery frame 18 may be lowered from the deployment vessel 14 once located above the subsea base 12, and temporarily secured thereto via the couplers 20 and sockets 22. The array of lowering lines 24 used to deploy the recovery frame 18 may then be winched taught in order to firmly tether the deployment vessel 14 to the subsea base 12, in order to prevent unwanted movement of the deployment vessel 14 during the following deployment of the hydroelectric turbine T, and as illustrated in Figure 4.

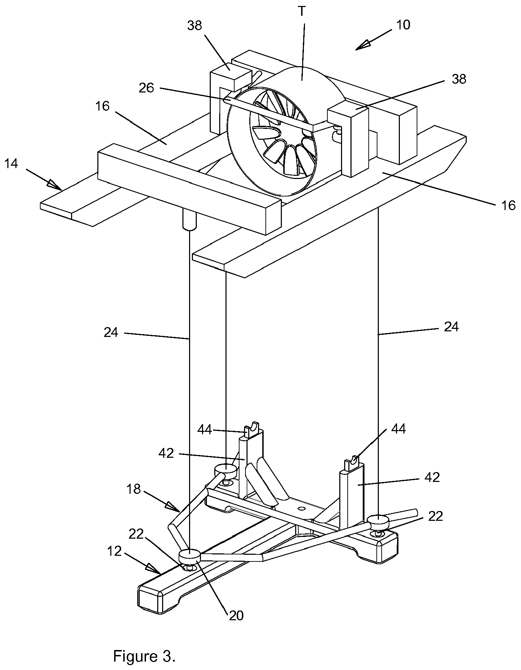

Turning then to Figures 4 once the deployment vessel 14 is tethered to the subsea base 12 the turbine T may be lowered towards the subsea base 12, preferably by means of a frame assembly 26 which is again displaceable from the deployment vessel 14 downwardly towards the subsea base 12, or conversely up from the subsea base 12 to the deployment vessel 14 during the corresponding recovery process. In the pre-deployment or fully retrieved position the frame assembly 26 may be located in a position above or adjacent the pair of hulls 16 and effectively within the portal defined therebetween, as can be seen for example in Figure 3, so as to be out of the water and therefore in a "dry" configuration.

The frame assembly 26, in the embodiment illustrated, is a simple U shape in plan comprising a pair of arms 28 spaced from one another such as to be capable of receiving the turbine T therebetween, and a cross member 30 joining the arms 28. The arms 28 preferably flare outwardly away from one another such that the distance between the free ends of the arms is greater than the distance between the arms 28 at the cross member 30. In addition, the distance between the free ends of the arms 28 is greater than the diameter of the turbine T while the length of the cross member 30 is only marginally greater than the diameter of the turbine T, in order to reduce the accuracy required to advance the frame assembly 26 about the turbine T, as described in detail hereinafter. The frame assembly 26 further comprises a pair of second couplers 32, one provided on each of the arms 28 and projecting downwardly as with the first couplers 20 of the recovery frame 18. The second couplers 32 are positioned to be engagable with a pair of connection points, for example in the form of trunnions 34 located on opposed sides of the turbine T, preferably on diametrically opposed exterior points of the turbine T. The trunnions 34 may however be replaced with any other suitable alternative, such as a collar to be located over the corresponding portion of the subsea base 12. Each of the trunnions 34 comprises a through bore 36 extending therethrough and dimensioned to receive the working end of one of the second couplers 32. In this way the pair of second couplers 32 may be releasably engaged with the pair of trunnions 34 in order to secure the frame assembly 26 about the turbine T.

In order to achieve an initial connection between the frame assembly 26 and the turbine T prior to deployment the turbine T may be located adjacent to the deployment vessel 14 in a face down orientation floating on the water or carried on a separate transport vessel (not shown). In this configuration an axis of rotation of the turbine T extends substantially vertically. As a result the through bores 36 will be oriented in a substantially horizontal direction. The deployment vessel 14 may comprise a pair of lift towers 38, for example one provided on each of the hulls 16, which are adapted to both raise and lower the frame assembly 26 from the deployment vessel 14, and in addition to effect rotation of the frame assembly 26 from a substantially horizontal plane to a substantially vertical plane. This rotation may be effected when the frame assembly 26 is retained in the fully recovered or pre-deployed position as illustrated in Figures 1-3 by rotating the frame assembly 26 into a substantially vertical plane. The pair of second couplers 32 will then be located in a substantially horizontal orientation, and at this point the turbine T which has been positioned adjacent the deployment vessel 14 may be floated or otherwise displaced towards and into the portal between the pair of hulls 16 such that the pair of second couplers 32 are brought into register with the pair of horizontally oriented through bores 36. The second couplers 32 can then be engaged in order to grip the trunnions 34, before the frame assembly 26 is rotated back into the horizontal orientation by the lift towers 38 such as to displace the turbine T into the position illustrated in Figures 1 to 3, whereby the axis of rotation is substantially horizontally disposed and thus in a working orientation.

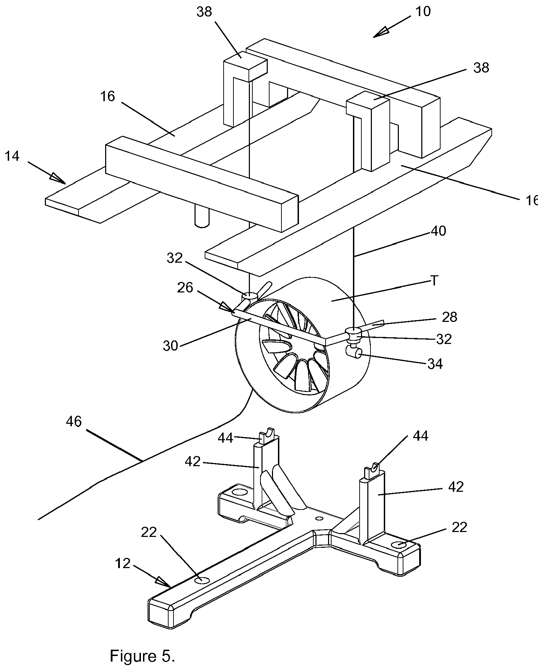

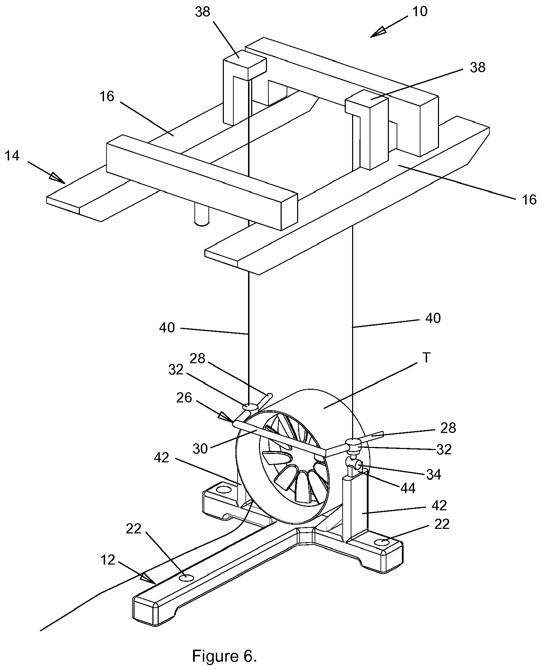

With the turbine T secured in the frame assembly 26 and the deployment vessel 14 tethered or otherwise fixed above the preinstalled subsea base 12, the frame assembly 26 can be lowered towards the subsea base 12. This may be achieved by means of the pair of lift towers 38 each feeding out a respective lifting line 40 such that the turbine T can be lowered onto the subsea base 12. Figures 5 and 6 show the lowering of the turbine T and frame assembly 26 in the absence of the optional recovery frame 18 and so the deployment vessel 14 is not tethered to the base 12 during this particular version of the deployment method.

In a preferred embodiment the subsea base 12 comprises a pair of uprights 42, an upper end of each defining a cradle for receiving one of the trunnions 34 on either side of the turbine T. The subsea base 12 additionally preferably comprises a guideway 44 projecting upwardly from the free end of each of the uprights 42, which acts to contact and thus guide each of the trunnions 34 downwardly into register with the cradled free end of the respective upright 42. The subsea base 12 may comprise a single guideway 44 in operative association with each upright 42 as illustrated, and these may be positioned at an upstream or downstream side of the upright 42, depending on the preferred deployment methodology. In a preferred deployment methodology the turbine T is lowered in the frame assembly 26 at a location slightly upstream of the uprights 42, and once at the height of the guideways 44 the tidal flow will be allowed to slowly displace the turbine T in a downstream direction until the trunnions 34 contact the guideways 44. The turbine T and frame assembly 26 can then be further lowered until the trunnions 34 are fully seated on the free ends of the uprights 42 as illustrated in Figure 6. The guideways 44 thus act to reduce the accuracy required in positioning the turbine T above the uprights 42 during the lowering thereof.

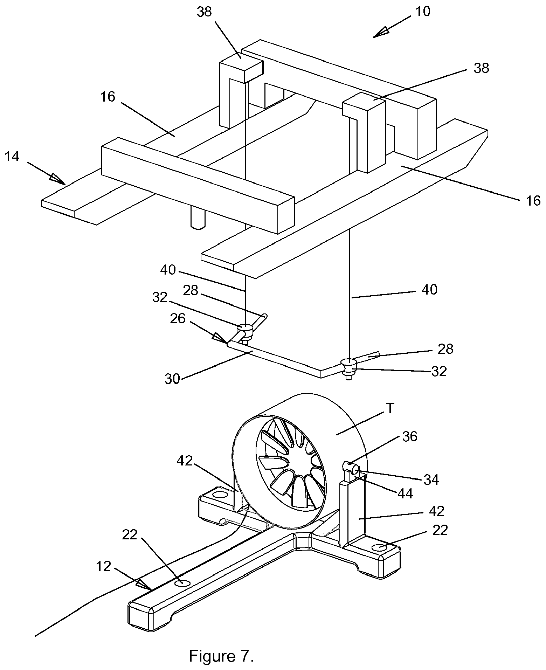

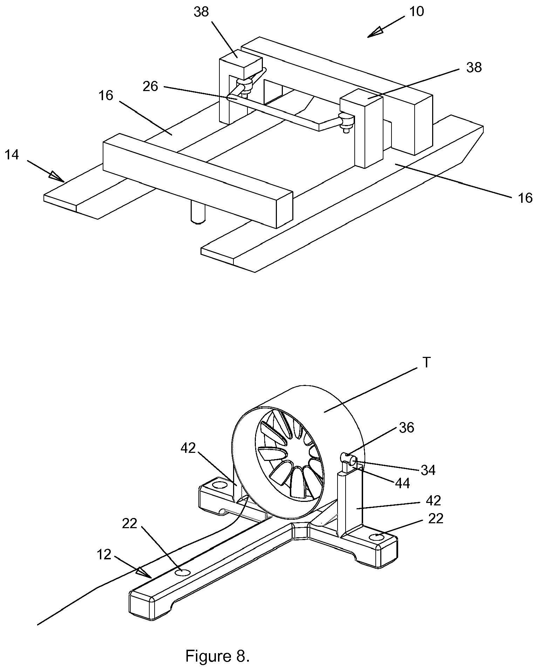

Once the trunnions 34 have come to rest on each of the uprights 42 the second couplers 32 may be released and the frame assembly 26 withdrawn upwardly towards the deployment vessel 14 as illustrated in Figure 7. If the recovery frame 18 has been used in the deployment process, once the frame assembly 26 has been fully withdrawn as illustrated in Figure 8 the first couplers 20 of the recovery frame 18 may then be released from engagement in the sockets 22 and the recovery frame 18 withdrawn from the subsea base 12 and back into position beneath the deployment vessel 14. At this point the turbine T is fully installed on the subsea base 12.

As part of the deployment methodology of the present invention it is preferred that a power transmission cable 46 is preinstalled on the turbine T prior to lowering the turbine T from the deployment vessel 14. As the turbine T is positioned at least partially out of the water when secured to the deployment vessel 14 it is possible to perform a dry connection of the power transmission cable 46 to the turbine T, greatly simplifying the connection process. By preinstalling the power transmission cable 46 to the turbine T it is also possible to test various aspects of the electrical operation of the turbine T. For example one or more electrical systems of the turbine T may be tested while the turbine is stationary, to ensure there are no faults with said systems. In addition it is possible to then partly or wholly submerge the turbine T but without lowering onto the subsea base 12, at which point the deployment vessel 14 may be displaced through the water in order to draw the turbine T through the water and thus effect rotation thereof. Thus the turbine T can begin to operate and generate electricity in order to allow electrical testing of various aspects of the turbine T, when actively generating electricity, prior to the installation thereof on the subsea base 12. In this way any issues with the electrical connection or the electrical functioning of the turbine T can be diagnosed prior to the installation onto the subsea base 12, thereby greatly simplifying the procedure of rectifying any such problems. Once the electrical connection has been thoroughly tested it is then possible to lower the turbine T onto the subsea base 12 as hereinbefore described, with the power transmission cable 46 preinstalled. The power transmission cable 46 may be connected to a suitable location on shore, or to a subsea inter-array cable (not shown) if multiple turbines T are deployed in an array.

It will be appreciated that the above mentioned procedures can simply be reversed in order to effect recovery of the turbine T from the subsea base 12. In a particularly preferred method of recovering the turbine T from the subsea base 12, the frame assembly 26 is lowered from the deployment vessel 14 to a depth at which the second couplers 32 are located slightly above the trunnions 34 and the frame assembly 26, in particular the cross member 30, is positioned upstream or downstream of the front/rear of the turbine T. The frame assembly 30 can then be slowly advanced horizontally towards the turbine T, either by allowing the frame assembly 26 to be displaced by the tidal flow, or through movement of the deployment vessel 14, until the cross member 30 contacts the front/rear of the turbine T. As the frame assembly 26 is advanced horizontally towards the turbine T the outwardly flared arms 28 will receive the turbine T therebetween and further advancement of the frame assembly 26 will act to draw the frame assembly into correct alignment, which is preferably completed through contact of the cross member 30 with the front/rear face of the turbine T.

At this point the frame assembly 26 can be further lowered such that the second couplers 32 are lowered into the bores 36 in the trunnions 34. The couplers 32 can then be engaged allowing the frame assembly 26 to lift the turbine T off the subsea base 12 to be recovered to the deployment vessel 14.

As detailed above, these recovery steps may be performed with or without the recovery frame 18 tethering the deployment vessel 14 to the subsea base 12.

## Claims

1. A method of deploying and recovering a hydroelectric turbine onto a subsea base located on a subsea surface, the method comprising:
positioning a deployment vessel above the subsea base; and lowering or raising the turbine between the deployment vessel and the subsea base.

2. The method of claim 1 comprising releasably securing a frame assembly to the turbine; and lowering or raising the frame assembly between the deployment vessel and the subsea base.

3. The method of claim 2 comprising recovering the turbine from the subsea base by lowering the frame assembly from the deployment vessel into a position laterally adjacent the turbine prior to releasably securing the frame assembly to the turbine; advancing the frame assembly into contact with the turbine in order to align the frame assembly and the turbine; and further lowering the frame assembly before releasably securing the frame assembly to the turbine.

4. The method according to claim 3 comprising performing the method in a running tide; and positioning the frame assembly down tide of the turbine prior to lowering the frame into position laterally adjacent the turbine.

5. The method of any preceding claim comprising electrically connecting a power transmission cable to the turbine prior to lowering the turbine from the deployment vessel.

6. The method of claim 5 comprising testing one or more electrical systems of the hydroelectric turbine once the power transmission cable has been electrically connected to the turbine.

7. The method of claim 5 or 6 comprising at least partially lowering the turbine from the deployment vessel into water; displacing the vessel in the water in order to effect rotation of the turbine; and testing the electrical operation of the turbine prior to deploying on the subsea base.

8. The method of any preceding claim comprising tethering the deployment vessel to the subsea base prior to displacing the turbine between the deployment vessel and the subsea base.

9. The method according to claim 8 comprising lowering a recovery frame from the deployment vessel into register with the subsea base prior to lowering the turbine; releasably securing the recovery frame to the subsea base to tether the deployment vessel; and lowering the turbine onto the subsea base.

10. The method of claim 9 comprising releasing the recovery frame from the subsea base following the deployment of the hydroelectric turbine.

11. A hydroelectric turbine deployment and recovery system comprising a deployment vessel; and a subsea base adapted to be releasably secured to the hydroelectric turbine at a pair of connection points on the turbine; wherein the deployment vessel is operable to displace the turbine between the deployment vessel and the subsea base.

12. The deployment and recovery system of claim 16 comprising a frame assembly displaceable relative to the deployment vessel, the frame assembly comprising a pair of couplings releasably engagable with the hydroelectric turbine.

13. The deployment and recovery system of claim 16 or 17 comprising a recovery frame adapted to be lowered from the deployment vessel and releasably secured to the subsea base in order to allow the vessel to be tethered to the subsea base.

14. The deployment and recovery system of any of claims 16 to 18 in which the subsea base comprises a guideway adapted to guide the turbine into register with the subsea base during lowering of the turbine onto the subsea base.

15. The deployment and recovery system of any of claims 16 to 19 comprising at least one sensor operable to determine if the turbine and the subsea base are in working engagement with one another.
